# EUROPEAN PATENT SPECIFICATION

(11) **EP 2 132 512 B1**
(45) Date of publication and mention of the grant of the patent: **20.06.2012**
(21) Application number: 08745108.4
(22) Date of filing: 04.04.2008
(51) Int. Cl.: F27B 14/00

(54) **SLOW COOKER LINER WITH SECURING BAND**
VERKLEIDUNG MIT SICHERUNGSBAND FÜR EINEN LANGSAMKOCHER
DOUBLURE DE COCOTTE MIJOTEUSE À BANDE DE FIXATION

(30) Priority: 05.04.2007 US 910275 P
(43) Date of publication of application: 16.12.2009
(73) Proprietor: M&Q IP Leasing, Inc., Wilmington, DE 19801 (US)
(72) Inventor: SCHMAL, Michael, D., Orwigsburg, PA 17961-1531 (US); BACHERT, Ernest, E., Orwigsburg, PA 17961-1306 (US)
(74) Representative: Klunker, Hans-Friedrich
(86) International application number: PCT/US2008/059404
(87) International publication number: WO 2008/124586

(56) References cited:
- US-A- 4 828 134
- US-A1- 2002 079 316
- US-A1- 2006 266 753
- US-A1- 2006 266 753
- US-B1- 7 163 120
- US-B1- 7 163 120
- US-B2- 7 112 764
- US-B2- 7 112 764

## Description

### TECHNOLOGY FIELD

The present invention relates in general to the culinary arts, and more particularly, to a slow cooker liner that forms a barrier between food placed within the liner and the interior surfaces a food cooking apparatus, such as a slow cooker.

### BACKGROUND

Slow cookers provide a simple cooking method for cooking particular dishes, including stews, pot roasts, chili, soups, and the like. One popular type of slow cooker is known as a crock pot. Although slow cookers cook these types of dishes in a desirable fashion, the ceramic cooking pot of the slow cooker can often become encrusted with burned on food residue which is difficult to clean. Accordingly, disposable liners may be placed inside the container of the slow cooker to cover the interior surfaces of the slow cooker thereby keeping the food separate from the surfaces of the slow cooker. These liners may include bag-shaped liners having a tubular body sealed at a bottom end and at the sides, and having an opening at a top end. When a user is finished with the slow cooker, the disposable liners can be removed and discarded, leaving little or no clean up.

The known liners for slow cookers, however, have certain shortcomings. For example, when the liners are placed in the slow cooker, excess material near the top or open end of the liner loosely folds over the rim of the slow cooker. This excess and loose liner material may interfere with cooking and may be aesthetically displeasing to the user. Also, the liner may fall into the slow cooker. Furthermore, loose liners tend to settle down into the contents of the crock pot, creating a mess.

The shape of conventional bag-shaped liners has also been a problem. For example, use of known bag-shaped liners may result in food getting trapped in the corners of the liner thereby making it difficult for the user to remove the contents from corner areas of the liner.

There is a need therefore, for an improved slow cooker liner and method for making the improved slow cooker liner. In particular, there is a need for a simple, flexible, replaceable, and durable slow cooker liner having a securing means around the opening perimeter of the liner to keep the excess liner fit snugly around the outside of the slow cooker, which would be aesthetically pleasing, and that also prevents the liner from falling and/or settling down into the slow cooker. Additionally, there is a need for a slow cooker liner that prevents food from being trapped in the corners of the liner and allows better utility for the liner as far as getting food out of the container.
US 2006266753 A1 discloses a generally cylindrical shaped disposable plastic liner for use with a rice cooker for minimizing cleanup after use. The liner has an elastic band, approximately one inch to three inches from the superior edge of the liner, to secure the liner to the rice cooker.
US 2004169042 A1 discloses a disposable insert or liner conformable to a slow cook cookware (such as, for example, a conventional crock pot or like slow cooking device) having a single interior cooking chamber. The liner is adapted to fit within the interior chamber of a crock pot so as to substantially be in adjacent contact with the crock pot interior chamber walls without interfering with the operation of the cooking device. The liner provides a single compartment which may be made of any material allowing heat conduction between the cookware and the liner. A suitable material may be a tear resistant aluminum foil to withstand typical food preparation in a crock pot. In one embodiment, the present invention includes a flange, notches, indentations or other formations which assist in the insertion and removal of the present invention in the cookware.; The invention advantageously provides for a desirable cooking environment, allows easy removal of food from the crock pot and provides simplified cleaning of the crock pot.

### SUMMARY

The present invention is directed to an improved slow cooker liner that may be placed within a cooking apparatus to form and maintain a barrier between the interior surfaces of a cooking apparatus (e.g., a slow cooker) and the food disposed therein. The slow cooker liner includes (a) a liner having a generally tubular, or bag-like shaped liner body, said liner body comprising: a closed bottom end, one or more side walls extending upwardly from the closed bottom end, and an open top end; and (b) a securing band incorporated around an entire perimeter of the liner proximate the open top end of the liner body; characterized in that the liner is made from a plastic material that can withstand a temperature of about 204.4 °C (400°F); and the securing band comprises a band comprising a polymer selected from a polyester elastomer, a polyester film, a combination thereof, an elastomeric polyamide based film or resin, or a polyurethane material, or a securing band including one or more materials having heat shrink propeties. When the liner is placed inside the container of a slow cooker, the liner covers the interior surfaces of the container and the open top end of the liner may be folded over the upper rim of the slow cooker. The securing band securely and snugly holds the liner to the exterior surface of the slow cooker thereby improving the aesthetic appearance of the liner while also preventing the liner from settling and/or falling back into the slow cooker.

The slow cooker liner may be placed inside the container or bowl of the slow cooker and disposed over the interior surfaces of the slow cooker (e.g., the closed bottom of the liner covers a bottom panel of the slow cooker and the liner side walls generally cover one or more side walls of the slow cooker). The top end and top opening extend upwardly beyond a top opening or rim of the slow cooker. The liner top end may be folded outwardly over the rim of the slow cooker. The high temperature securing band may keep the excess liner fit snugly around an outside of the pot, thereby preventing the liner from settling down and/or falling back into the slow cooker.

The securing band may be attached to the perimeter of the liner proximate the liner open top end. For example, the securing band may be adhered to the perimeter of the liner using a high temperature adhesive. The securing band may also be attached to the perimeter of the liner by ultrasonically welding the securing band to the liner. Further, the securing band may be stitched onto the liner with high temperature thread. In addition, the securing band may be attached to the liner by heat sealing the securing band onto the liner.

In one embodiment, the securing band may include a high temperature elastic band incorporated around the perimeter of the open top end of the liner. The elastic band may be stretched to installed the liner over the rim of the slow cooker and is preferably sized to fit securely and snugly around the upper portion of the slow cooker with at least some elastic compression or tension remaining in the elastic band (i.e., the elastic band is still being stretched). In another embodiment, the securing band may include a heat shrink material. The heat shrink material shrinks or contracts as the slow cooker is heated and causes the liner materials to conform to and snugly fit against the outside of the slow cooker.

Preferably, the slow cooker liner is made from a high temperature plastic material, such as a high temperature nylon resin material. The liner material should be suitable for food cooking and food preparation. In one embodiment, the liner and securing band are suitable for use in cooking applications between about 37.8°C (100°F) and 204.4°C (400°F). The high temperature liner having a securing band can withstand a temperature of about 204.4°C (400°F).

In addition to the high temperature securing band, the closed bottom end may include a contoured, or shaped, bottom edge. Preferably, the contoured bottom edge includes a flat bottom end and one or more contoured edges. Each contoured edge may extend outward and upward from an opposite end of the flat bottom edge and may merge and join with the flat bottom edge. Each contoured edge may merge and join at its opposite end with an edge of the side walls.

Preferably, each of the contoured edges can include a substantially straight tapered edge. Each of the tapered edges can be formed having a predetermined angle from a plane defined by the flat bottom edge. Alternatively, each of the contoured edges can include a curved edge.

Additional features and advantages of the invention will be made apparent from the following detailed description of illustrative embodiments that proceeds with reference to the accompanying drawings.

### BRIEF DESCRIPTION OF THE DRAWINGS

The foregoing and other aspects of the present invention will become apparent from the following detailed description of the invention when considered in conjunction with the accompanying drawings. For the purpose of illustrating the invention, there is shown in the drawings embodiments that are presently preferred, it being understood, however, that the invention is not limited to the specific instrumentalities disclosed. In the drawings:

FIG. 1 is a perspective view of an exemplary slow cooker liner placed within a slow cooker;

FIG. 2 is an exploded perspective view of the slow cooker and slow cooker liner of FIG. 1;

FIG. 3 is a cross sectional view of the slow cooker liner of FIG. 1;

FIG. 4 is a front perspective view of another exemplary slow cooker liner having an elastic securing band and a contoured bottom edge in accordance with an embodiment of the present invention;

FIG. 5 is a front perspective view of another exemplary slow cooker liner having a heat shrink securing band and a contoured bottom edge in accordance with an embodiment of the present invention;

FIG. 6 is a front perspective view of another exemplary slow cooker liner in accordance with an embodiment of the present invention;

FIG. 7 is a front perspective view of another exemplary slow cooker liner in accordance with an embodiment of the present invention;

FIG. 8A is a cross sectional view of an exemplary slow cooker liner with side walls folded outward over the securing band;

FIG. 8B is a cross sectional view of an exemplary slow cooker liner with side walls folded inward over the securing band;

FIG. 9A is a cross sectional view of an exemplary slow cooker liner with a liner strip placed over the securing band external to the side wall;

FIG. 9B is a cross sectional view of an exemplary slow cooker liner with a liner strip placed over the securing band internal to the side wall;

FIG. 10 is a front perspective view of an exemplary slow cooker liner in accordance with an embodiment of the present invention;

FIG. 11A is a cutaway front view of a securing band attached to a folded portion of a sidewall along its length; and

FIG. 11B is a cutaway front view of a securing band attached to a folded portion of a sidewall at its end.

### DETAILED DESCRIPTION OF ILLUSTRATIVE EMBODIMENTS

The present invention is directed slow cooker liner systems having a securing band, for forming and maintaining an improved barrier between a cooking apparatus - such as a slow cooker - and food disposed therein. The slow cooker liner may be designed and constructed to be disposed within the slow cooker and the open top end may be folded outward over the rim of the slow cooker such that the securing band engages an outer surface of the slow cooker. The slow cooker liner may include a size and shape to substantially conform to the container (*i.e*., the interior surfaces) of a slow cooker.

In accordance with embodiments of the present invention, the slow cooker liner has a securing band incorporated around a perimeter of an open top end of the liner. The securing band may help keep excess liner material proximate an upper portion of the liner secured and snugly fit over the rim and around the outside of the slow cooker. The securing band may keep any excess liner out of the way of the cooking process and improve the aesthetic appearance of the slow cooker liner. Also, the securing band may reduce and/or prevent the liner from falling into and/or settling down into the container of the slower cooker and the food contained therein.

The slow cooker liner and securing band are suitable for high temperature applications. As used herein, high temperature means the slow cooker liner and securing band are preferably made from materials suitable for use in high temperature applications of between about 37.8°C (100 °F) and about 204.4°C (400 °F). The improved high temperature liner having a securing band can withstand temperatures up to about 204.4°C (400°F).

In addition, the slow cooker liner may be formed having a contoured bottom edge, thereby preventing food from becoming trapped in the bottom corners of the liner. Accordingly, the improved slow cooker liner having a contoured bottom edge also helps improve food safety, helps maintain food quality, reduces shrinkage, and may reduce labor costs and resource consumption.

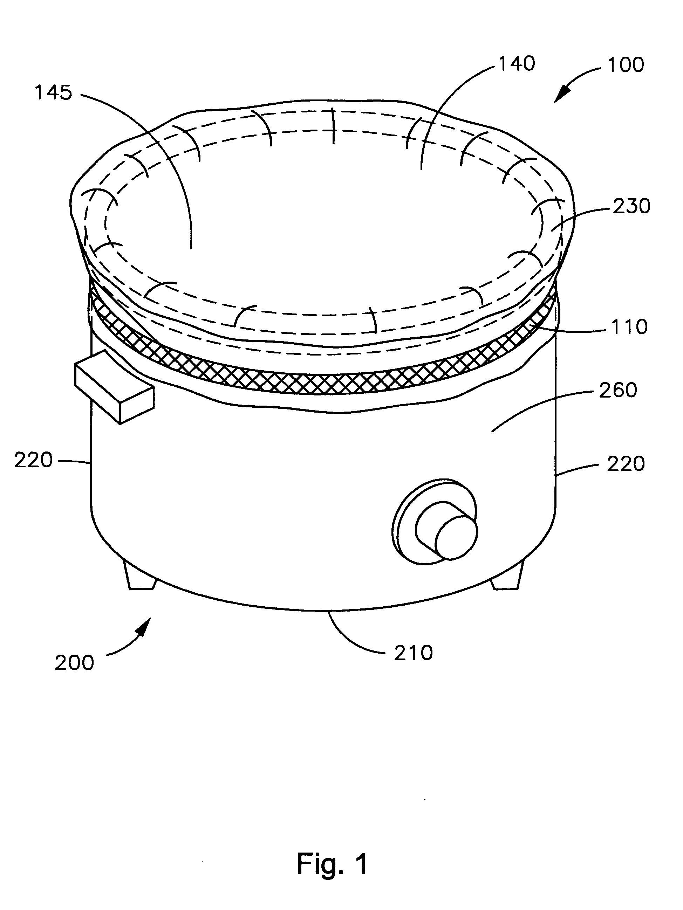

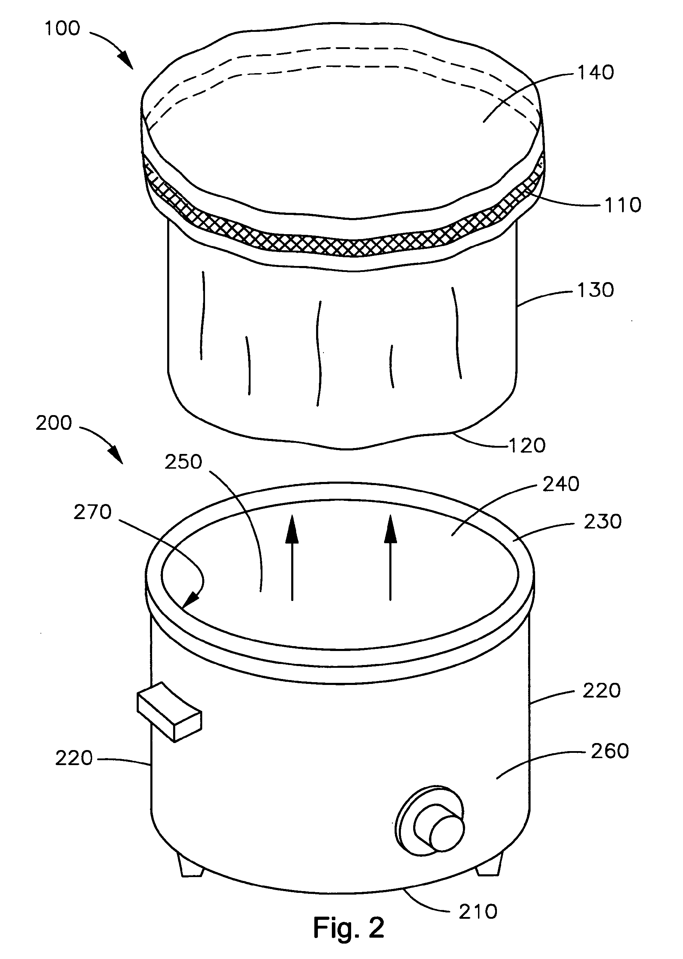

FIGs. 1-11B depict exemplary slow cooker liner systems in accordance with embodiments of the present invention. As shown, the slow cooker liner system 100 may be placed within a cooking apparatus 200, such as a slow cooker, in order to form a barrier between the slow cooker and food being cooked/heated in the slow cooker. As shown, an exemplary slow cooker 200 may include a bottom 210, one or more side walls 220 extending upward from the bottom 210 to a rim or lip 230 that forms a top opening 240 of the slow cooker. The bottom 210, side wall(s) 220, and rim 230 of the slow cooker define a container or bowl 250 in which food may be placed to be cooked.

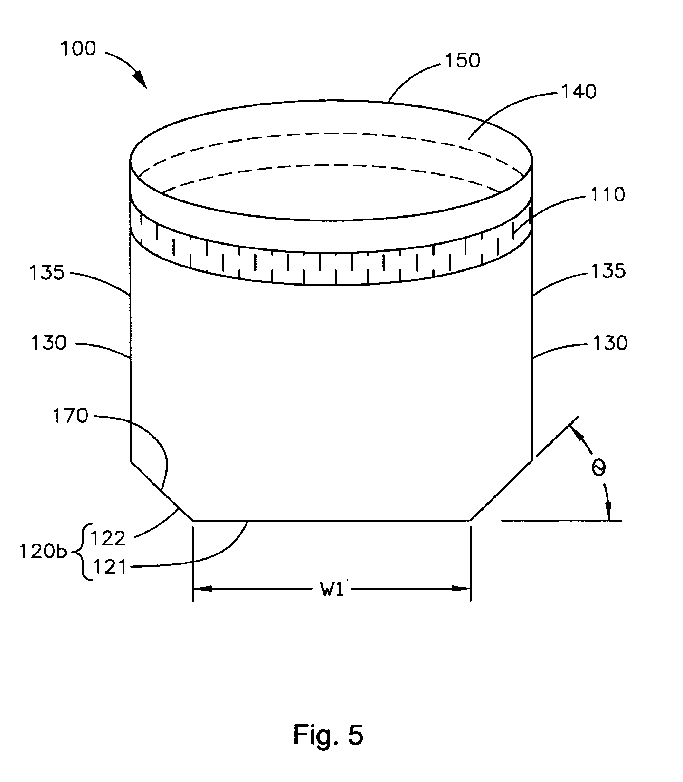

As shown, the slow cooker liner system 100 includes liner having a securing band 110 about the open top end 140 that helps form and maintain an improved barrier between the slow cooker and food which may be disposed within the slow cooker. The exemplary securing band shown in FIGs. 1-4 includes an elastic securing band 110a. The exemplary securing band shown in FIGs. 5-7 includes a heat shrink securing band 110b.

As shown in FIGs. 1-11B, an exemplary slow cooker liner 100 includes a preformed substantially tubular, or bag-like, shaped body. The liner body includes a closed bottom end 120, one or more upwardly extending side walls 130 and an open top end 140. In use, the closed bottom end 120 of the liner 100 is disposed over the bottom 210 of the slow cooker and the side wall(s) of the liner 130 are disposed over the side wall(s) of the slow cooker 220.

A high temperature securing band 110 is incorporated around a perimeter of the open top end of the liner 140. The securing band may be located at the distal end of the liner around the peripheral of the open top end 140, or may be located proximate the open top end 140 in an upper portion of the liner and around the periphery of the open top end 140. The securing band 110 may be attached to an inside surface of the liner and/or an outside surface of the liner.

The one or more flexible side walls 130 extend upwardly from the bottom edge 120, and a top opening 140 may be formed at the opposite top end by a top edge 150 of each of the side walls 130. The closed bottom end 120 may be folded or sealed closed. The one or more side walls 130 may be connected together, preferably along one or more folded or sealed edges 135.

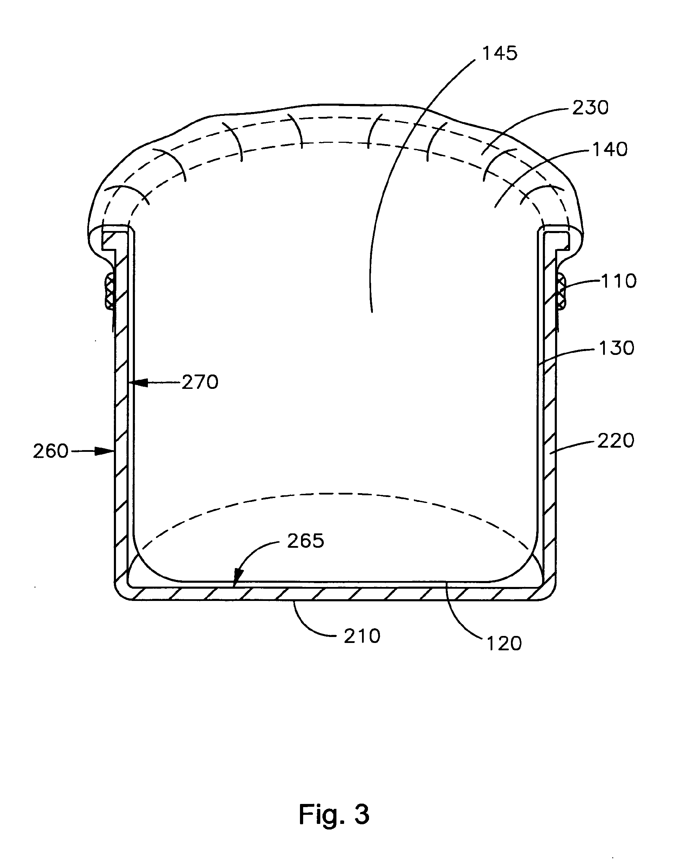

The closed bottom edge 120 and the upwardly extending side walls 130 may define a food holding vessel 145 capable of fitting within a slow cooker container and holding a volume of food that may be disposed therein for heating or cooking. Preferably, the liner 100 is generously sized to afford complete coverage of the slow cooker 200 and allow an excess portion of the liner 100 proximate the top end to be folded outwardly over the top edge and rim 230 of the slow cooker. The securing band 110 may then contract thereby holding the excess portion of the liner to an exterior surface 260 of the slow cooker, as best shown in FIGs. 1 and 3.

Although some forming may occur once the liner has been disposed within the container of the slow cooker, such as moisture adhesion and thermal-forming as the slow cooker is heated, the liner may be preformed having a closed bottom end 120 and upwardly extending sidewalls 130 which may define the food holding vessel 145 which may be sized and shaped to fit within and cover the interior surface 270 of the container of the slow cooker 200. In addition, the weight of the food may also exert some pressure on the liner which also helps to further form the liner to the slow cooker 200.

FIGs. 1-4 show an exemplary slow cooker liner 100 having an elastic securing band 110. As shown in FIGs. 1-4, a high temperature elastic securing band is incorporated around the perimeter of the opening of the liner 140. The high temperature elastic band 110 may be made from a high temperature elastic polymer, such as a polyester elastomer, for example. The band may also be made from other materials such as an elastomeric polyamide based film or resin or a polyurethane material, for example. Example polyester elastomers include: RKX-230, RKX-227, and RKX-233, which are manufactured by Ticona® and which have different elongations and melt points. An example elastomeric polyamide includes PEBAX® made by ARKEMA®.

Table of exemplary elongations and melting points:

| Material | Elongation | Melting Point |
|---|---|---|
| RKX-230 (Ticona)® | 440% | 176.7°C (350°F) |
| RKX-227 (Ticona)® | 350% | 176.7°C (350°F) |
| RKX-233 (Ticona)® | 240% | 206.1°C (403°F) |

The elastic securing band 110 may be attached to the perimeter of the liner. For example, the elastic securing band 110 may be attached to the perimeter of the liner using a high temperature adhesive. Alternatively, the elastic securing band 110 may be attached to the perimeter of the liner by ultrasonically welding the securing band to the liner. In another embodiment, the elastic securing band 110 may be stitched to the liner material using a high temperature thread. In yet another embodiment, the elastic securing band may be heat sealed to the liner.

FIGs. 5-7 show another embodiment of the securing band. As shown in FIGs. 5-7, the securing band may include a heat shrink securing band 110. A heat shrink securing band 1 10b may include a material(s) that has(have) heat shrink properties. For example, a heat shrinkable polyester film - such as MQ501™ - may be attached (e.g., ultrasonically welded) to the perimeter of a polyester based liner. When the slow cooker 200 is turned on and heats the liner material, the shrinkable polyester film may shrink around the perimeter of the slow cooker and may snag up the excess material around the perimeter of the liner.

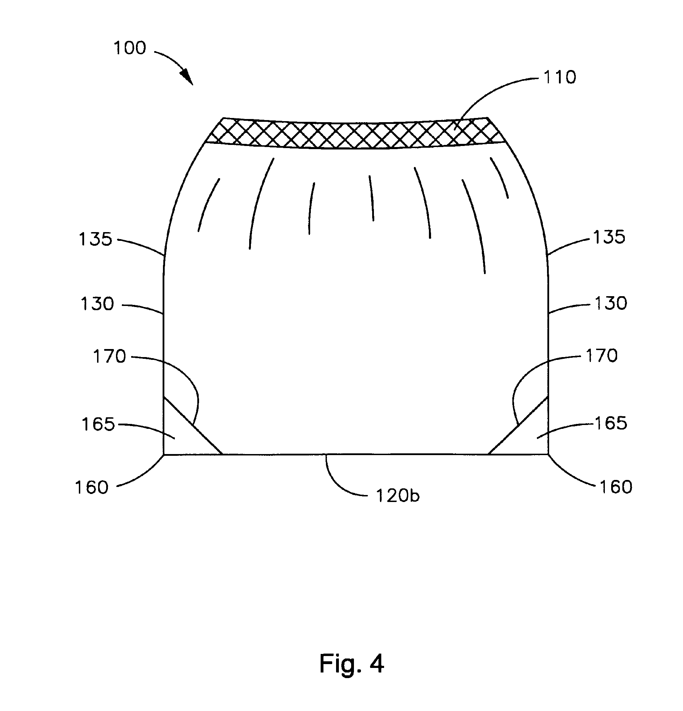

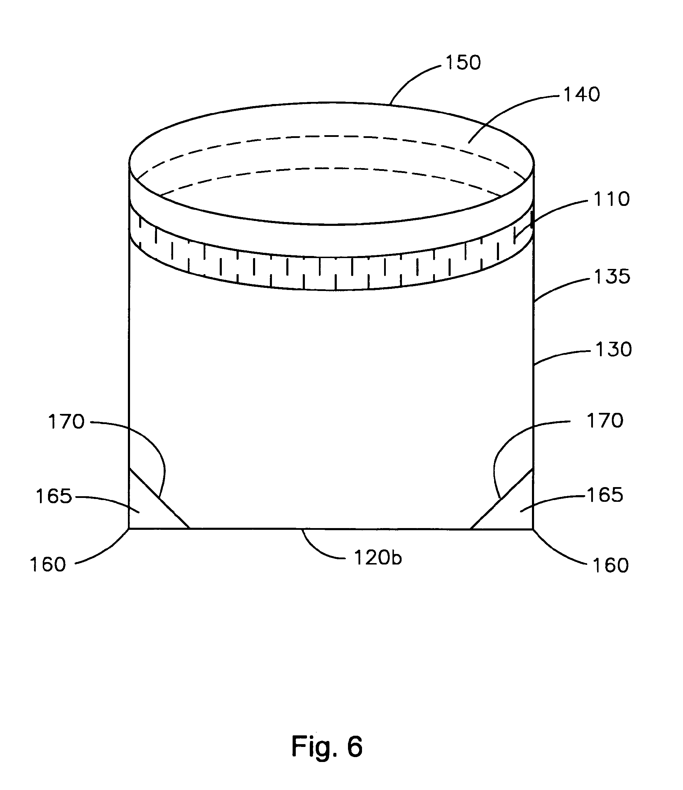

As shown in FIGs. 4-7, the closed bottom end 120 of the liner may be formed having a contoured or shaped bottom edge 120b. The contoured bottom edge 120b may eliminate, close or seal off the dog ears or tails 165 that are typical of conventional slow cooker liners proximate the corner areas 160 formed between the bottom edge 120 and the side walls 130. The dog ears or tails 165 of the liner may be eliminated by either sealing or bonding 170 the side walls 130 together, as shown, thereby closing off the dog ear portion 165 of the liner. The unused (e.g., closed off) material of the dog ear 165 can be left in place on the liner (as shown in FIGs. 4 and 6), or the unused material may be removed at some time prior to using the liner (e.g., FIG. 5 shows the dog ears removed).

FIG. 5 shows the contoured bottom edge 120b having a flat bottom edge 121 and one or more contoured or shaped edges 122, wherein the contoured edges 122 include one or more tapered, or sloped, edges. Each contoured edge may extend outward and upward from the flat bottom edge 121 and may join and merge an opposite end of the flat bottom edge 121 with one or more of the side wall 130 sealed edges. The tapered edges may form an angle θ with a bottom plane.

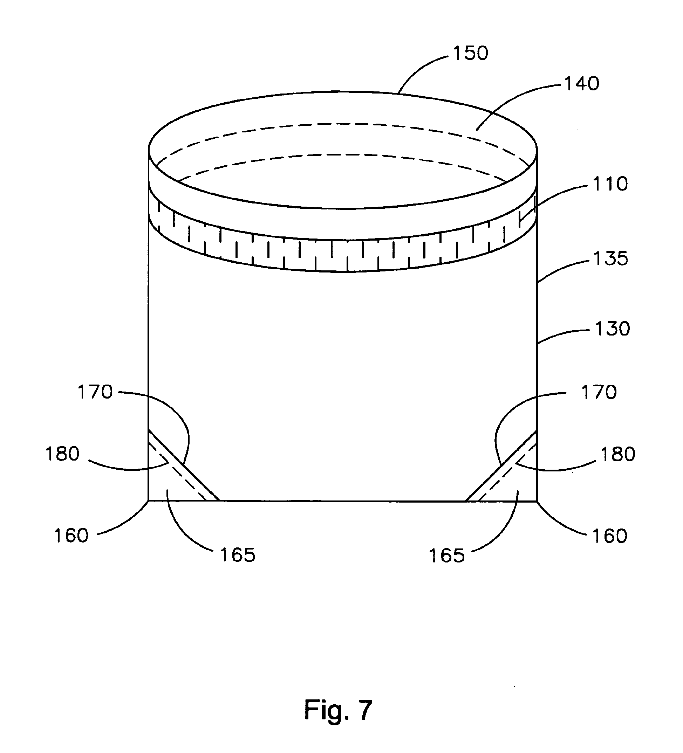

As shown in FIG. 7, the liner 100 may include a perforation 180 formed parallel along each of the sealed contoured edges 170 on the dog ear 165 side of the sealed contoured edge 170. The perforated edge 180 may be made using a cutting device (not shown) to make a plurality of serially aligned cuts, or slots in a line that is substantially parallel to the contoured edge 170 and the dog ear 165 side of the contoured edge 170. These perforations 180 allow the dog ears 165 to be easily removed either after the manufacturing process or just prior to use.

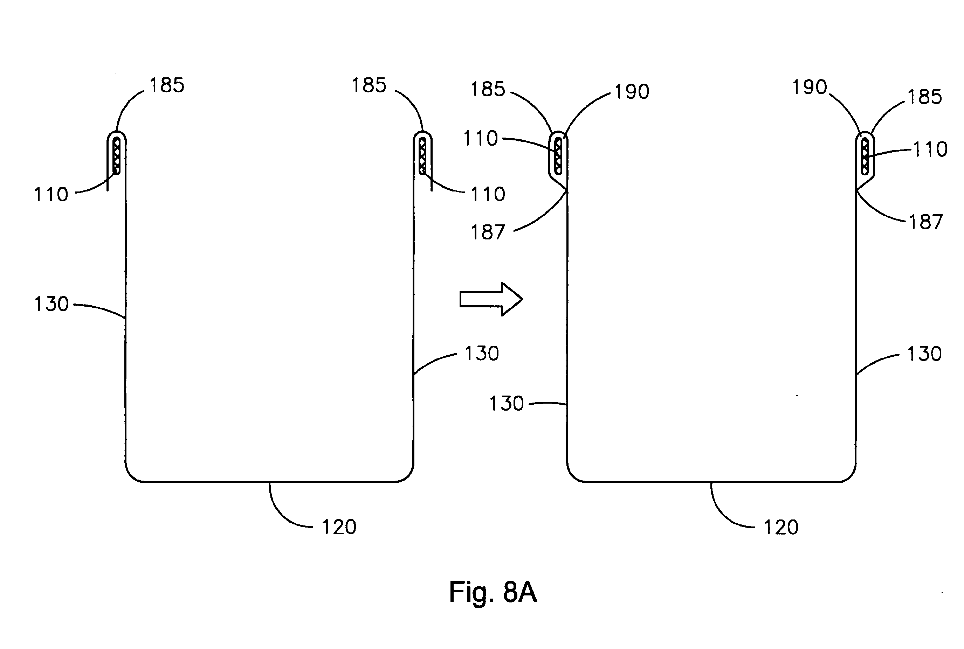

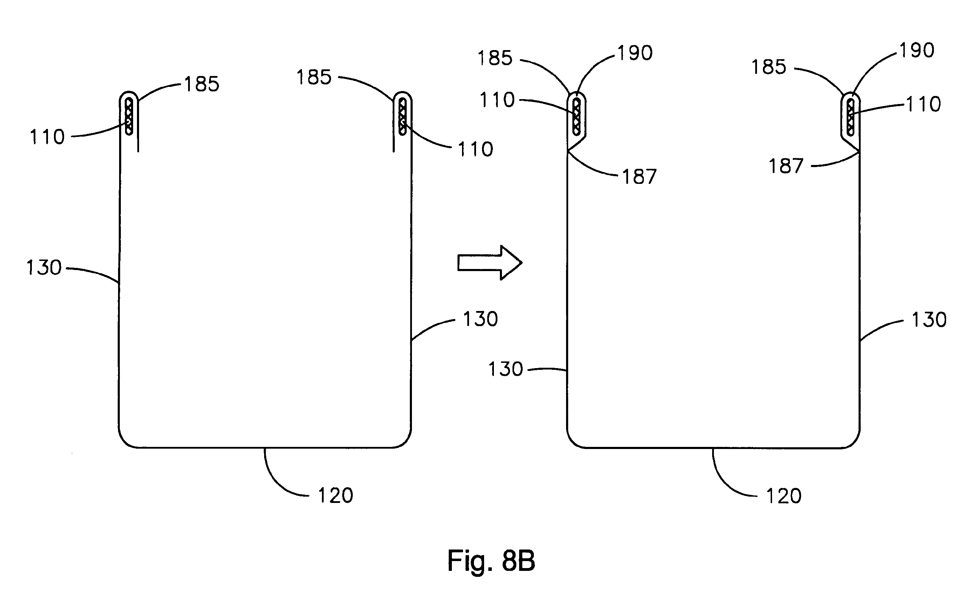

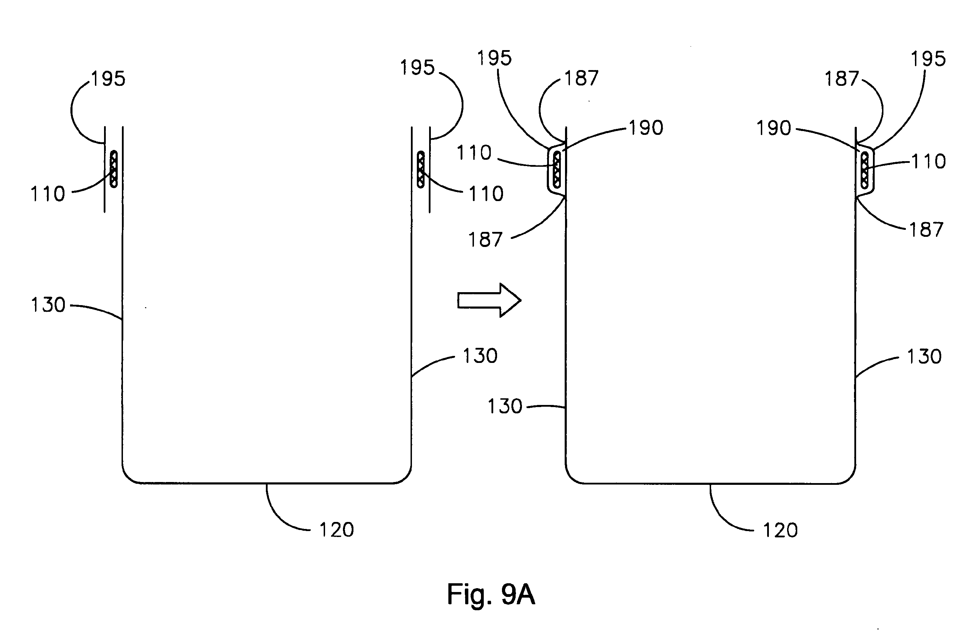

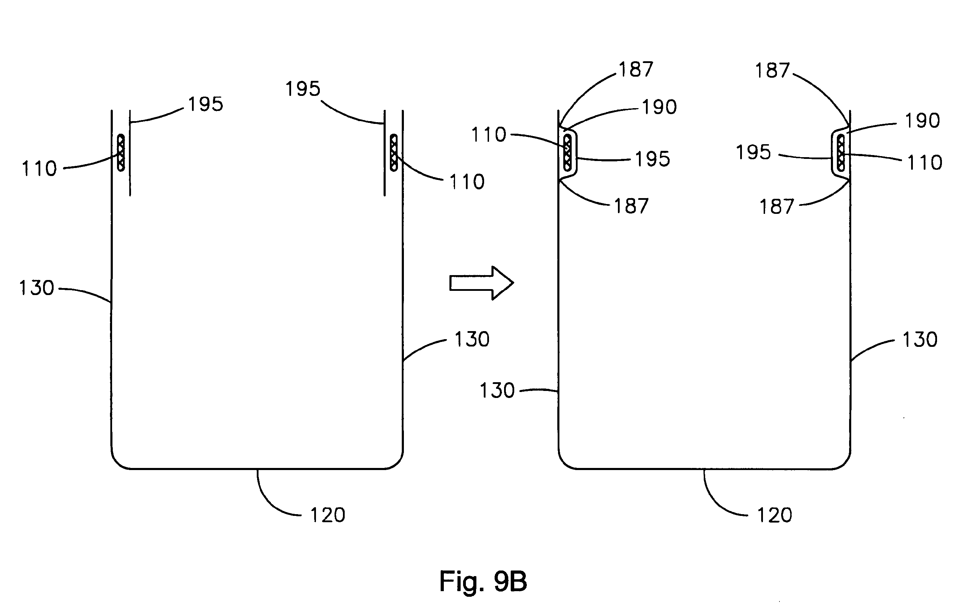

In some embodiments, the securing band 110 may be enclosed within the one or more sidewalls as seen in FIGs. 8A-10. For example, the liner material may be folded 185 outwardly (FIG. 8A) or inwardly (FIG. 8B) proximate to the side wall 130 to cover the securing band 110. The folded portion 185 may then be attached 187 to the securing band 110 and/or the sidewall 130 to encapsulate the securing band 110 within a cavity 190. A benefit of this embodiment is that only one edge needs to be sealed to enclose the securing band. In another embodiment, a separate liner strip 195 may be placed over the securing band 110 wherein the securing band 110 is outside of the sidewall 130 (FIG. 9A) or inside of the side wall 130 (FIG. 9B). The liner strip 195 may then be attached 187 to the securing band 110 and/or the side wall 130 to encapsulate the securing band 110 within a cavity 190. A benefit of this embodiment is that a special device is not needed to fold the edge of the liner over the securing band.

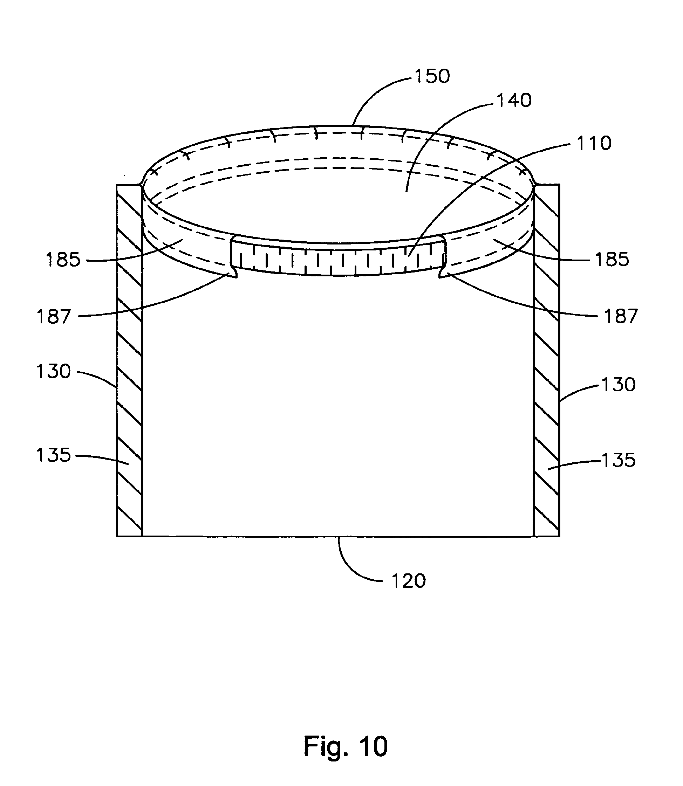

FIG. 10 shows the front view of a liner system 100 wherein the securing band 110 is enclosed within a liner side wall 130. In this embodiment, the folded 185 over side wall or liner strip 195 was sealed to the side wall 130 rather than the securing band 110. The securing band may be sealed to the side wall by a seal extending along the length of the lining system. The resulting liner system comprises a securing band that is not adhered to the liner along its length, but is adhered to the liner at its ends and forming a securing band 110 around the perimeter of the liner system 100.

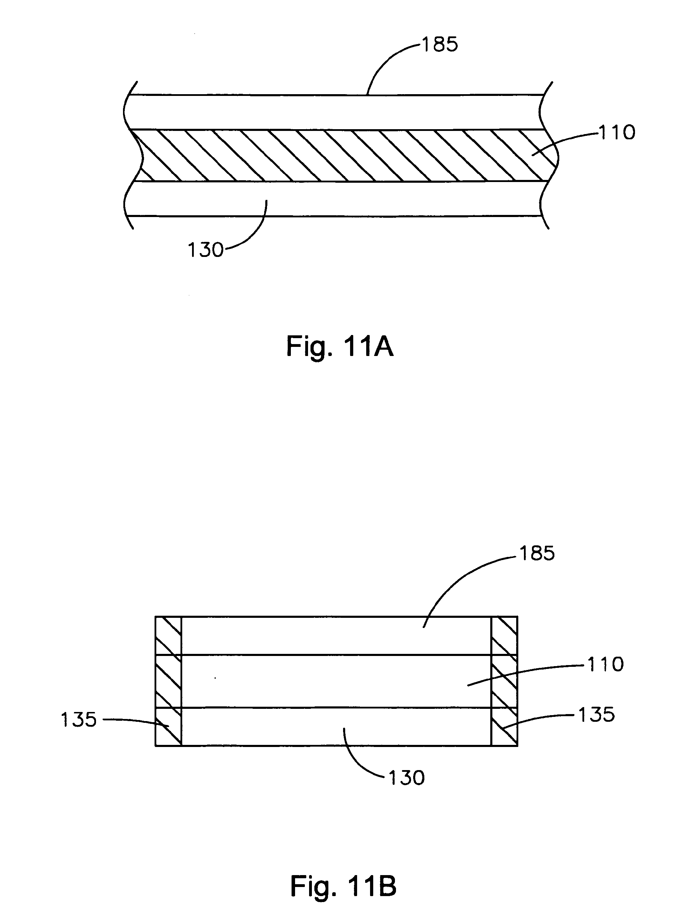

When the folded portion 185 or liner strip 195 is attached to the securing band 110 and the sidewall 130, the attachment may be along the entire length of the securing band 110 (FIG. 11A). When the folded portion 185 or liner strip 195 is attached only to the side wall 130, there may be no attachment of the folded portion 185 or liner strip 195 to the securing band 110. This may cause a problem in embodiments where the securing band 110 is elastic. For example, after the folded portion 185 or liner strip 195 has been attached to the side wall 130, the unattached elastic securing band may relax to its original length within the cavity 190, reducing the effectiveness of the securing band. To alleviate this problem, the ends of the securing band 110 may be sealed to the side walls 130 to form the sealed edge 135 (FIG. 11B). In this embodiment, when the securing band relaxes, it is attached to the side wall and forms a continuous securing band around the entire perimeter of the liner system 100.

There may be several benefits to enclosing the securing band within the side wall. For example, an enclosed securing band may be less likely to come into contact with a food product. This is of significance if the securing band is not approved by the United States Food and Drug Administration for contact with food. Further, if the securing band is comprised of an elastomeric material, such material may become tacky at increased temperatures and stick to the outside of a slow cooker. Enclosing the securing band within the side walls prevents this from occurring. Also, enclosing the securing band within the side walls may provide for a more secure mechanism for adhering the securing band to the liner.

The liner may include a variety of shapes and sizes. Preferably, the shape and size of the liner will correspond to the shape and the size of the slow cooker container that the liner will be used with. In another embodiment, the slow cooker liner may include a shaped bottom edge that corresponds to the shape of the bottom of the slow cooker container. For example, if the slow cooker container has a rectangular-shaped bottom, the slow cooker liner would have a corresponding rectangular-shaped bottom, if the slow cooker container has a square-shaped bottom, the slow cooker liner would have a corresponding square-shaped bottom, if the slow cooker container has an oval-shaped bottom, the slow cooker liner would have a corresponding oval-shaped bottom, etc.

The liner material may be suitable for continuous service under various conditions and may have the following characteristics: suitable for temperature conditions ranging from about 37.8°C (100°F) to about 204.4°C (400°F), has a good thermal heat transfer rate; has a tensile strength capable of withstanding approximately 89.6 MPa (13,000 psi) without orientation; has a tear strength capable of holding up to about 50.000g/m3 (50 grams/liter); has a tabor strength capable of sustaining about 1000 cycles tested with a load of about 500 grams; has a chemical resistance to most chemicals, such as mineral acids, phenols and concentrated formic acid; has a bacterial and mold resistance making it rot proof and resistant to molds and impermeable to micro-organisms; acts as an odor barrier to most odors; has a grease and oil resistance having an oil-barrier properties effective against animal, vegetable, and mineral oils and fats; allows some moisture-vapor transmission at raised temperatures; is gas impermeable which makes the liner well suited for packaging under nitrogen, carbon dioxide, or vacuum, and is resistant to oxygen permeation which reduces fogging in frozen foods and may help extend shelf-life; is non-scalping (*e.g*., no flavor loss); and will not block (*e.g*., will not stick together).

In certain embodiments, the liner material may provide oil and grease resistance and may be manufactured from resins that meet all requirements of the United Sates Food and Drug Administration regulations 21 CFR 177.1500 (a)(1)(6), (b)(1)(6.1) and 21 CFR 178.2010 to produce articles intended for use in the processing, handling and packaging of food products. In addition, embodiments of the liner material may have the following properties as listed in Table 1.

| Properties | Values |
|---|---|
| Thickness | 19.1 to 76.2 µm (.75 to 3 mils) |
| Area Yield | 38.7 m²/kg (27,240 in²/lb) |
| Haze | 10.4 to 12.6 % |
| Gloss, 20 Degree | 51.3 to 61.8 |
| Tensile Strength | 103 to 131 Mpa (15,000 to 19,000 psi) |
| Elongation | 315 to 400 % |
| Tear | 18.5 to 21.3 g/µm (470 to 540 grams/mll) |
| Puncture Strength | 340 to 470 grams |
| Coefficient of Friction (film-film, Kinetic) | 0.20 to 0.45 |
| Coefficient of Friction (film-metal, Kinetic) | 0.30 to 0.45 |
| Oxygen Transmission Rates (cc/m²/day =cm³/m²/day): | |
| 0% R.H., 22.8°C (73°F) | 43.4 (2.80 cc/100 in²/day) |
| 50% R.H., 22.8°C (73°F) | 29.5 (1.90 cc/100 in²/day) |
| 90% R.H., 22.8°C (73°F) | 68.2 (4.40 cc/100 in²/day) |
| 100% R.H., 22.8°C (73°F) | 178 (11.5 cc/100 in²/day) |
| Water Vapor Transmission Rates (g/m²/day): | |
| 100% R.H., 37.8°C (100°F) | 496 (32.0 grams/100 in²/day) |

The liner may be made from a durable and high temperature plastic material or nylon film, such as a nylon resin. For example, the liner may be made from a high temperature nylon or polyester, such as a material from the polyamide family including nylon 3, 4, 6, 9, 11, 12, and triple nylons. An exemplary nylon resin material that is suitable for use with the present invention may include MONOLYN™ material manufactured by M&Q Plastic Products. The thickness of the liner may range between, for example, 0.8 mils and 1.0 mils.

In yet another embodiment, the entire liner and/or part of the liner may be made out of high temperature elastic films like polyester elastomer or PEBAX (*i.e*., a polyamide elastomer), so that it fits snugly about the vessel, with no excess bag for food to get trapped in. In this embodiment, the bag-shaped liner would stretch around the rim or lip of the slow cooker to improve the cooking process and provide a nice, neat appearance.

In another embodiment, the entire liner and/or part of the liner may be made out of a thin, high temperature clingy film, similar to Saran wrap, so that it clings snugly around the surface area of the container. This design and construction would improve the aesthetic appearance and performance of the liner and would again eliminate excess bag for food to get trapped in.

In another embodiment of the invention, a thin walled vessel may be thermoformed out of nylon or some other high temperature thermo formable plastic, instead of creating a bag to line the slow cooker. This thermoformed vessel would slide down inside the slow cooker container to act a barrier between the interior surfaces of the slow cooker and the food contained therein.

The thermoformed vessel may also fit snugly so that food cannot get trapped. The thermoformed vessel may be sized so that it will not extend beyond the top of the slow cooker liner container, so that there is no excess liner material to worry about. Also, the thermoformed vessel liner could be fluted, to help control heat transfer between the slow cooker wall and the liner, and hence prevent burning of the food. These thermoformed vessel liners may "nest together" - like paper coffee filters or paper cup cake liners - when being stored prior to use.

The improved liner may be a removable, replaceable, flexible, disposable, durable, high temperature, plastic liner that may be disposed within a container of a slow cooker to cover the interior surfaces of the container. The liner may be provided to keep food separate from the interior surface of the container thereby preventing food contained within the slow cooker container from "baking-on" and/or "burning-on" the surfaces of the slow cooker. Embodiments of the slow cooker liner may also help improve food safety and quality, enhance flavor and juiciness of foods, minimize clean up time, and reduce shrinkage by allowing left over food to be removed from the slow cooker and saved in the liner for further use.

Although illustrated and described herein with reference to certain specific embodiments, it will be understood by those skilled in the art that the invention is not limited to the embodiments specifically disclosed herein. Those skilled in the art also will appreciate that many other variations for the specific embodiments described herein are intended to be within the scope of the invention as defined by the following claims.

## Claims

1. A disposable slow cooker lining system (100) to cover the interior surface of a slow cooker (200) comprising:
(a) a liner having a generally tubular, or bag-like shaped liner body, said liner body comprising:
a closed bottom end (120),
one or more side walls (130) extending upwardly from the closed bottom end (120), and
an open top end (140); and
(b) a securing band (110) incorporated around an entire perimeter of the liner proximate the open top end (140) of the liner body;
**characterized in that**
the liner is made from a plastic material that can withstand a temperature of about 204.4 °C (400°F); and
the securing band (110) comprises a band (110a) comprising a polymer selected from a polyester elastomer, a polyester film, a combination thereof, an elastomeric polyamide based film or resin, or a polyurethane material, or a securing band (110b) including one or more materials having heat shrink propeties.

2. The lining system (100) of claim 1 wherein the liner and the securing band (110) can withstand cooking applications between about 37.8 °C (100°F) and about 204.4 °C (400°F).

3. The lining system (100) of claim 1 or 2 wherein the securing band (110) is adhered to the perimeter of the liner using a high temperature adhesive.

4. The lining system (100) of claim 1 or 2 wherein the securing band (110) is attached to the perimeter of the liner by ultrasonically welding the securing band (110) to the liner.

5. The lining system (100) of claim 1 or 2 wherein the securing band (110) is attached to the liner by heat sealing the securing band (110) onto the liner.

6. The lining system (100) of claim 1 or 2 wherein the securing band (110) is stitched to the liner using high temperature thread.

7. The lining system (100) of any of claims 1 to 6 wherein the band (110a) is sized to fit securely and snugly around the upper portion (230) of the slow cooker (200) with at least some elastic compression or tension remaining in the band (110a).

8. The lining system (100) of any of claims 1 to 7 wherein an upper edge of the securing band (110) is located at the open top end (140).

9. The lining system (100) of any of claims 1 to 8 wherein the liner comprises of a high temperature plastic material.

10. The lining system (100) of claim 9 wherein the high temperature plastic material comprises a high temperature nylon resin material.

11. The lining system (100) of any of claims 1 to 10 wherein the securing band (110) is enclosed within a cavity (190) formed by the liner.

12. The lining system (100) of claim 11 wherein the securing band (110) is enclosed within the one or more side walls (130) by the one or more side walls (130) being folded over the securing band (110) to encapsulate the securing band (110) within the cavity (190).

13. The lining system (100) of claim 11 wherein the securing band (110) is enclosed within the one or more side walls (130) by a liner strip (195) being placed over the securing band (110) to encapsulate the securing band (110) within the cavity (190).

14. The lining system (100) of any of claims 1 to 13 wherein the closed bottom end (120) includes a contoured bottom edge (120b).

15. The lining system (100) of claim 14 wherein the contoured bottom edge (120b) comprises a flat bottom edge (121) and one or more contoured edges (122).

16. The lining system (100) of claim 15 wherein the one or more contoured edges (122) extend outward and upward from an opposite end of the flat bottom edge (121) and merge to join with the flat bottom edge (121).

17. The lining system (100) of claim 15 wherein the one or more contoured edges (120b) merge and join at an opposite end with an edge of the side walls (130).

18. The lining system (100) of claim 15 wherein the one or more contoured edges (120b) include a substantially straight tapered edge.

19. The lining system (100) of claim 15 wherein the one or more contoured edges (120b) are formed having a predetermined angle (θ) from a plane defined by the flat bottom edge (121).

20. The lining system (100) of claim 15 wherein the one or more contoured edges (122) include a curved edge.

21. The lining system (100) of claim 14 wherein the securing band (110) is enclosed within the one or more side walls (130) by the one or more side walls (130) being folded over the securing band (110) to encapsulate the securing band (110) within a cavity (190).

22. The lining system (100) of any of claims 1 to 21 wherein the securing band (110) comprises a elastic polymer having a melting point of about 176.7 °C (350°F) or higher.

23. The lining system (100) of any of claims 1 to 22 wherein the securing band (110) comprises a elastic polymer having an elongation of at leaset 350%.

## Patentansprüche

1. Einwegauskleidungssystem (100) für einen Langsamkocher zum Bedecken der inneren Oberfläche eines Langsamkochers (200), umfassend:
(a) eine Auskleidung, welche einen im Allgemeinen schlauchförmigen oder beutelartig geformten Auskleidungskörper aufweist, wobei der Auskleidungskörper umfasst:
ein geschlossenes unteres Ende (120),
eine oder mehrere sich von dem geschlossenen unteren Ende (120) nach oben erstreckende Seitenwände (130), und
ein offenes oberes Ende (140), und
(b) ein Sicherungsband (110), welches nahe dem offenen oberen Ende (140) des Auskleidungskörpers um den gesamten Umfang der Auskleidung eingearbeitet ist,
**dadurch gekennzeichnet, dass**
die Auskleidung aus einem Kunststoffmaterial besteht, das einer Temperatur von ungefähr 204,4°C (400°F) standhalten kann, und
das Sicherungsband (110) ein Band (110a), welches ein Polymer, ausgewählt aus einem Polyester-Elastomer, einer Polyesterfolie, einer Kombination davon, einer elastomeren Polyamid-basierten Folie oder Kunstharz, oder einem Polyurethan-Material umfasst, oder ein Sicherungsband (110b), welches ein oder mehrere Materialien mit Wärmeschrumpfeigenschaften enthält, umfasst.

2. Auskleidungssystem (100) nach Anspruch 1, wobei die Auskleidung und das Sicherungsband (110) Kochanwendungen zwischen ungefähr 37,8°C (100°F) und ungefähr 204,4°C (400°F) standhalten können.

3. Auskleidungssystem (100) nach Anspruch 1 oder 2, wobei das Sicherungsband (110) an den Umfang der Auskleidung unter Verwendung eines Hochtemperaturklebers geklebt ist.

4. Auskleidungssystem (100) nach Anspruch 1 oder 2, wobei das Sicherungsband (110) an den Umfang der Auskleidung mittels Ultraschallschweißens des Sicherungsbandes (110) an die Auskleidung angebracht ist.

5. Auskleidungssystem (100) nach Anspruch 1 oder 2, wobei das Sicherungsband (110) an die Auskleidung mittels Heißsiegelns des Sicherungsbandes (110) auf die Auskleidung angebracht ist.

6. Auskleidungssystem (100) nach Anspruch 1 oder 2, wobei das Sicherungsband (110) an die Auskleidung unter Verwendung eines Hochtemperaturfadens festgenäht ist.

7. Auskleidungssystem (100) nach einem der Ansprüche 1 bis 6, wobei das Band (110a) dimensioniert ist, sicher und festsitzend um den oberen Teil (230) des Langsamkochers (200) zu passen, wobei zumindest etwas elastische Kompression oder Spannung in dem Band (110a) verbleibt.

8. Auskleidungssystem (100) nach einem der Ansprüche 1 bis 7, wobei sich ein oberer Rand des Sicherungsbandes (110) an dem offenen oberen Ende (140) befindet.

9. Auskleidungssystem (100) nach einem der Ansprüche 1 bis 8, wobei die Auskleidung ein Hochtemperatur-Kunststoffmaterial umfasst.

10. Auskleidungssystem (100) nach Anspruch 9, wobei das Hochtemperatur-Kunststoffmaterial ein Hochtemperatur-Nylon-Kunstharzmaterial umfasst.

11. Auskleidungssystem (100) nach einem der Ansprüche 1 bis 10, wobei das Sicherungsband (110) in einer durch die Auskleidung gebildeten Kavität (190) eingeschlossen ist.

12. Auskleidungssystem (100) nach Anspruch 11, wobei das Sicherungsband (110) in der einen oder den mehreren Seitenwänden (130) eingeschlossen ist, indem die eine oder die mehreren Seitenwände (130) über das Sicherungsband (110) gefaltet sind, um das Sicherungsband (110) in der Kavität (190) einzukapseln.

13. Auskleidungssystem (100) nach Anspruch 11, wobei das Sicherungsband (110) in der einen oder den mehreren Seitenwänden (130) eingeschlossen ist, indem ein Auskleidungsstreifen (195) über dem Sicherungsband (110) platziert ist, um das Sicherungsband (110) in der Kavität (190) einzukapseln.

14. Auskleidungssystem (100) nach einem der Ansprüche 1 bis 13, wobei das geschlossene untere Ende (120) einen konturierten unteren Rand (120b) enthält.

15. Auskleidungssystem (100) nach Anspruch 14, wobei der konturierte untere Rand (120b) einen flachen unteren Rand (121) und einen oder mehrere konturierte Ränder (122) umfasst.

16. Auskleidungssystem (100) nach Anspruch 15, wobei sich der eine oder die mehreren konturierten Ränder (122) nach außen und oben von einem gegenüberliegenden Ende des flachen unteren Randes (121) erstrecken und übergehen, um sich mit dem flachen unteren Rand (121) zu verbinden.

17. Auskleidungssystem (100) nach Anspruch 15, wobei der eine oder die mehreren konturierten Ränder (120b) an einem gegenüberliegenden Ende in einen Rand der Seitenwände (130) übergehen und sich damit verbinden.

18. Auskleidungssystem (100) nach Anspruch 15, wobei der eine oder die mehreren konturierten Ränder (120b) einen im Wesentlichen geraden, abgeschrägten Rand enthalten.

19. Auskleidungssystem (100) nach Anspruch 15, wobei der eine oder die mehreren konturierten Ränder (120b) in einem vorgegebenen Winkel (θ) zu einer durch den flachen unteren Rand (121) definierten Ebene gebildet sind.

20. Auskleidungssystem (100) nach Anspruch 15, wobei der eine oder die mehreren konturierten Ränder (122) einen gekrümmten Rand umfassen.

21. Auskleidungssystem (100) nach Anspruch 14, wobei das Sicherungsband (110) in der einen oder den mehreren Seitenwänden (130) eingeschlossen ist, indem die eine oder die mehreren Seitenwände (130) über das Sicherungsband (110) gefaltet werden, um das Sicherungsband (110) in einer Kavität (190) einzukapseln.

22. Auskleidungssystem (100) nach einem der Ansprüche 1 bis 21, wobei das Sicherungsband (110) ein elastisches Polymer umfasst, welches einen Schmelzpunkt von ungefähr 176,7°C (350°F) oder höher aufweist.

23. Auskleidungssystem (100) nach einem der Ansprüche 1 bis 22, wobei das Sicherungsband (110) ein elastisches Polymer umfasst, welches eine Dehnung von zumindest 350% aufweist.

## Revendications

1. Système de chemisage jetable pour cocotte mijoteuse (100) destiné à couvrir la surface intérieure d'une cocotte mijoteuse (200), comprenant :
(a) une chemise présentant un corps de chemise généralement en forme de sachet ou tubulaire, ledit corps de chemise comprenant :
une extrémité inférieure fermée (120) ;
une ou plusieurs parois latérales (130) s'étendant vers le haut à partir de l'extrémité inférieure fermée (120) ;
une extrémité supérieure ouverte (140), et
(b) une bande de fixation (110) intégrée autour d'un périmètre entier de la chemise à proximité de l'extrémité supérieure ouverte (140) du corps de chemise,
**caractérisé en ce que** :
la chemise est fabriquée en matière plastique pouvant résister à une température d'environ 204,4 °C (400 °F), et
la bande de fixation (110) comprend une bande (110a) comprenant un polymère sélectionné parmi un élastomère de polyester, film en polyester, ou une combinaison de ceux-ci, un film ou une résine à base de polyamide élastomère, ou un matériau en polyuréthane, ou une bande de fixation (110b) incluant un ou plusieurs matériaux présentant des propriétés de thermorétractantes.

2. Système de chemisage (100) selon la revendication 1, dans lequel la chemise et la bande de fixation (110) peuvent résister à des applications de cuisson comprises entre 37,8 °C (100 °F) et environ 204,4 °C (400 °F).

3. Système de chemisage (100) selon la revendication 1 ou 2, dans lequel la bande de fixation (110) colle au périmètre de la chemise à l'aide d'un adhésif haute température.

4. Système de chemisage (100) selon la revendication 1 ou 2, dans lequel la bande de fixation (110) est fixée au périmètre de la chemise par un soudage ultrasonique de la bande de fixation (110) sur la chemise.

5. Système de chemisage (100) selon la revendication 1 ou 2, dans lequel la bande de fixation (110) est fixée à la chemise par un thermocollage de la bande de fixation (110) sur la chemise.

6. Système de chemisage (100) selon la revendication 1 ou 2, dans lequel la bande de fixation (110) est cousue sur la chemise à l'aide d'un fil haute température.

7. Système de chemisage (100) selon l'une quelconque des revendications 1 à 6, dans lequel la bande de fixation (110a) est dimensionnée de manière à s'adapter fermement et étroitement autour de la partie supérieure (230) de la cocotte mijoteuse (200), au moins une certaine compression ou tension élastique demeurant présente dans la bande (110a).

8. Système de chemisage (100) selon l'une quelconque des revendications 1 à 7, dans lequel un bord supérieur de la bande de fixation (110) se trouve au niveau de l'extrémité supérieure ouverte (140).

9. Système de chemisage (100) selon l'une quelconque des revendications 1 à 8, dans lequel la chemise comprend une matière plastique résistant aux hautes températures.

10. Système de chemisage (100) selon la revendication 9, dans lequel la matière plastique résistant aux hautes températures comprend un matériau de résine nylon résistant aux hautes températures.

11. Système de chemisage (100) selon l'une quelconque des revendications 1 à 10, dans lequel la bande de fixation (110) est renfermée dans une cavité (190) formée par la chemise.

12. Système de chemisage (100) selon la revendication 11, dans lequel la bande de fixation (110) est renfermée dans les limites d'une ou de plusieurs parois latérales (130) par la une ou plusieurs parois latérales (130) repliées sur la bande de fixation (110) afin d'encapsuler la bande de fixation (110) à l'intérieur de la cavité (190).

13. Système de chemisage (100) selon la revendication 11, dans lequel la bande de fixation (110) est renfermée dans les limites d'une de plusieurs parois latérales (130) par un ruban de chemise (195) placé sur la bande de fixation (110) afin d'encapsuler la bande de fixation (110) à l'intérieur de la cavité (190).

14. Système de chemisage (100) selon l'une quelconque des revendications 1 à 13, dans lequel l'extrémité inférieure fermée (120) inclut un bord inférieur façonné (120b).

15. Système de chemisage (100) selon la revendication 14, dans lequel le bord inférieur façonné (120b) comprend un bord inférieur plat (121) ainsi qu'un ou plusieurs bords façonnés (122).

16. Système de chemisage (100) selon la revendication 15, dans lequel un ou plusieurs bords façonnés (122) s'étendent vers l'extérieur et vers le haut à partir d'une extrémité opposée du bord inférieur plat (121), et fusionnent pour se joindre au bord inférieur plat (121).

17. Système de chemisage (100) selon la revendication 15, dans lequel le un ou plusieurs bords façonnés (120b) fusionnent pour se joindre, au niveau d'une extrémité opposée, à un bord des parois latérales (130).

18. Système de chemisage (100) selon la revendication 15, dans lequel le un ou plusieurs bords façonnés (120b) incluent un bord conique en grande partie droit.

19. Système de chemisage (100) selon la revendication 15, dans lequel le un ou plusieurs bords façonnés (120b) sont formés avec un angle prédéterminé (θ) à partir d'un plan défini par le bord inférieur plat (121).

20. Système de chemisage (100) selon la revendication 15, dans lequel le au moins un ou plusieurs bords façonnés (122) incluent un bord courbe.

21. Système de chemisage (100) selon la revendication 14, dans lequel la bande de fixation (110) est renfermée dans les limites d'une ou de plusieurs parois latérales (130) par la une ou plusieurs parois latérales (130) repliées sur la bande de fixation (110) afin d'encapsuler la bande de fixation (110) à l'intérieur de la cavité (190).

22. Système de chemisage (100) selon l'une quelconque des revendications 1 à 21, dans lequel la bande de fixation (110) comprend un polymère élastique présentant un point de fusion supérieur ou égal à environ 176,7 °C (350 °F).

23. Système de chemisage (100) selon l'une quelconque des revendications 1 à 22, dans lequel la bande de fixation (110) comprend un polymère élastique présentant un allongement d'au moins 350 %.
